# EUROPEAN PATENT SPECIFICATION

(11) **EP 0 448 535 B1**
(45) Date of publication and mention of the grant of the patent: **09.11.1994**
(21) Application number: 91850065.3
(22) Date of filing: 13.03.1991
(51) Int. Cl.: B01D 17/00, F16J 15/00, F17D 3/14, F04C 27/00, F16L 55/00

(54) **A seal device**
Dichtungsvorrichtung
Dispositif d'étanchéité

(30) Priority: 22.03.1990 SE 9001038
(43) Date of publication of application: 25.09.1991
(73) Proprietor: ITT FLYGT AB, S-171 25 Solna (SE)
(72) Inventor: Forssberg, Alf, S-155 00 Nykvarn (SE)
(74) Representative: Larsson, Sten

(56) References cited:
- GB-A- 907 607

## Description

This invention concerns a method and a device for sealing of a submersible machine such as a pump or a mixer.

A machine of this type normally comprises an electric motor and a hydraulic unit with an impeller connected to the motor via a rotating shaft.

In order to prevent the medium within the hydraulic unit to penetrate into the motor along the shaft, there are one or several seals arranged between the hydraulic unit and the motor. A common seal type is the so-called mechanical seal which consists of a seal ring rotating with the shaft and a non-rotating seal ring connected to the surrounding housing. The two seal rings are pressed against each other by the force of a spring thus preventing medium from passing between them.

If the medium within the hydraulic unit contains pollutions, these might easily penetrate between the seal surfaces depending on higher pressure in the hydraulic unit. This might damage the seal surfaces and constitute leaks. Thus, it is common to arrange two seal devices parted by a room filled with oil which lubricates and cools the seal surfaces. In this way the seal adjacent the motor will always operate with a clean medium thus diminishing the risks for damage of the seal surfaces. If the seal adjacent the hydraulic part should be damaged, medium, such as water, from the hydraulic part can penetrate into the oil room, but if the oil is checked at regular intervals, the machine can be repaired before the oil has been too diluted and any serious damages have been caused. An example of such a solution is shown in the Swedish patent publication 381 318.

If the seal adjacent the hydraulic unit is damaged and the water in said unit penetrates into the oil housing, the pressure will rise. This means that there is an increased risk that the seal adjacent the motor will start to leak as the pressure within the motor is lower. It has therefore been desirable to limit the pressure increase within the oil housing if the lower seal should leak and at the same time divert incoming water without risking oil leakage. This problem is solved by help of the method and the device stated in the claims.

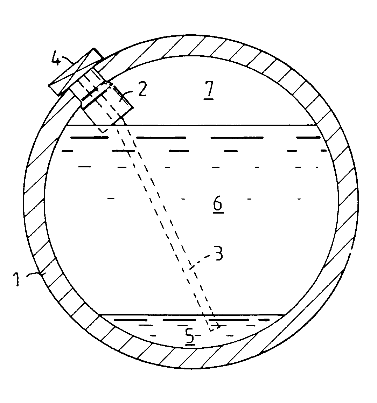

The invention is described more closely below with reference to the enclosed drawing. Here, 1 stands for an oil housing with a non-return valve incorporated into its wall. 3 stands for the inlet to the valve and 4 its outlet. 5, 6 and 7 stand for water, oil-and air volumes.

Normally, when the seals are undamaged, the oil housing 1 contains oil and air and the pressure within the oil housing corresponds with that of the depth to which the machine is lowered below the water surface. The same pressure also prevails within the electric motor. If water penetrates into the oil housing, the pressure increases as the oil housing is a closed room.

As water is heavier than oil and if the latter is of a non-emulsifying type, layers will appear in the oil housing with water 5 at the bottom, air 7 at the top and oil 6 therebetween. According to the invention this fact is utilized such that a non-return valve 2 is arranged in the wall 1 of the oil housing and having its inlet 3 near the bottom where incoming water will assemble. When the non-return valve opens, only water will thus flow out from the oil housing.

In order to secure that only water will flow out, the non-return valve is so adjusted, that it opens only at a pressure which goes beyond the normal pressure to a certain degree. This means that the valve opens only after a certain amount of water has penetrated into the oil housing. The valve is then open until the boundary layer 5 - 6 between water and oil has gone down to a certain level and the pressure has decreased in a corresponding way. As the inlet 3 i arranged somewhat below the critical level there is no risk for oil flowing out.

According to a preferred embodiment the non-return valve 2 is placed in the opening which is used for changing oil in the oil housing and this means that no additional openings have to be made in existing machines.

It is also possible to collect the water coming from the non-return valve thus making it possible to measure the amount of water that has leaked through the seal.

## Claims

1. A method to limit over pressure in an oil housing placed in a seal arrangement between an electric motor and a hydraulic unit in a submersible machine such as a pump or a mixer, characterized in that a non-return valve for diverting of incoming water is arranged in the wall (1) of the oil housing, said non-return valve having its inlet (3) placed in or near the lower part of the housing and its outlet outside said wall (1), and having its opening pressure so adjusted that drainage takes place when the amount of water exceeds a certain level.

2. A device for carrying out the method according to claim 1, characterized in that a non-return valve (2) is arranged in the wall (1) of the oil housing placed in a seal arrangement between an electric motor and a hydraulic unit in a submersible machine such as a pump or a mixer, said valve having its inlet (3) near the bottom of the oil housing and its outlet outside said wall (1).

3. A device according to claim 2, characterized in that the non-return valve (2) is arranged in the opening in the wall (1) which normally is used for exchanging oil in the housing.

## Patentansprüche

1. Verfahren zum Begrenzen von Überdruck in einem Ölgehäuse, das in einer Dichtungsanordnung zwischen einem Elektromotor und einer Hydraulikeinheit in einer tauchbaren Maschine, wie einer Pumpe oder einem Mischwerk, angeordnet ist,
dadurch gekennzeichnet, daß ein Rückschlagventil zum Ausleiten eindringenden Wassers in der Wandung (1) des Ölgehäuses angeordnet ist, wobei der Einlaß (3) des Rückschlagventils in oder nahe bei dem unteren Teil des Gehäuses angeordnet ist und sein Auslaß außerhalb der Wandung (1) angeordnet ist, und wobei der Öffnungsdruck des Rückschlagventils derart eingestellt wird, daß eine Ausleitung stattfindet, wenn die Wassermenge einen bestimmten Pegel übersteigt.

2. Vorrichtung zum Durchführen des Verfahrens nach Anspruch 1,
dadurch gekennzeichnet, daß ein Rückschlagventil (2) in der Wandung (1) des Ölgehäuses angeordnet ist, das in einer Dichtungsanordung zwischen einem Elektromotor und einer Hydraulikeinheit in einer tauchbaren Maschine, wie einer Pumpe oder einem Mischwerk, angeordnet ist, wobei der Einlaß (3) des Ventils nahe dem Boden des Ölgehäuses angeordnet ist und sein Auslaß außerhalb der Wandung (1) angeordnet ist.

3. Vorrichtung nach Anspruch 2,
dadurch gekennzeichnet, daß das Rückschlagventil (2) in der Öffnung der Wandung (1) angeordnet ist, die normalerweise zum Austauschen des Öls in dem Gehäuse verwendet wird.

## Revendications

1. Méthode pour limiter une surpression dans un carter d'huile disposé de manière étanche entre un moteur électrique et un ensemble hydraulique dans une machine submersible telle qu'une pompe ou un mélangeur, caractérisée en ce qu'une soupape anti-retour destinée à déverser une eau d'infiltration est disposée dans la paroi (1) du carter d'huile, ladite soupape anti-retour ayant son orifice d'entrée (3) placé dans ou proche de la partie inférieure du carter et son orifice de sortie à l'extérieur de ladite paroi (1), et possédant sa pression d'ouverture ajustée de manière qu'un drainage a lieu lorsque la quantité d'eau dépasse un certain niveau.

2. Dispositif pour mettre en oeuvre la méthode selon la revendication 1, caractérisé en ce qu'une soupape anti-retour (2) est disposée dans la paroi (1) du carter d'huile et placée de manière étanche entre un moteur électrique et un ensemble hydraulique dans une machine submersible telle qu'une pompe ou un mélangeur, ladite soupape possédant son orifice d'entrée (3) proche du fond du carter d'huile et son orifice de sortie à l'extérieur de ladite paroi (1).

3. Dispositif selon la revendication 2, caractérisé en ce que la soupape anti-retour (2) est disposée dans l'ouverture placée dans la paroi (1) qui est normalement utilisée pour changer l'huile dans le carter.
